**Europäisches Patentamt**

**European Patent Office**

**Office européen des brevets**

(11) Numéro de publication: **0 031 760**
A1

# (12) DEMANDE DE BREVET EUROPEEN

(21) Numéro de dépôt: **80401814.1**

(22) Date de dépôt: **18.12.80**

(51) Int. Cl.³: **D 21 H 3/78,** C 04 B 31/32

(30) Priorité: **27.12.79 FR 7931835**

(43) Date de publication de la demande: **08.07.81**
**Bulletin 81/27**

(84) Etats contractants désignés: **BE DE GB IT LU NL**

(71) Demandeur: **ARJOMARI-PRIOUX Société anonyme dite:, 3 rue du Pont-de-Lodi, F-75006 Paris (FR)**

(72) Inventeur: **Bartoli, Giampaolo, "Le Guillermet", F-38850 Charavines (FR)**
Inventeur: **Gomez, Daniel, "Le Guillermet", F-38850 Charavines (FR)**

(74) Mandataire: **Combe, André et al, CABINET BEAU DE LOMENIE 55 rue d'Amsterdam, F-75008 Paris (FR)**

(54) **Nouveaux papiers contenant du ciment, leur procédé de préparation et leurs applications.**

(57) Des papiers, contenant d'environ 10% à environ 80% en poids d'un liant hydraulique (ciment) par rapport au mélange de base constitué part des fibres, une charge minérale et un liant organique. Ces papiers sont préparés selon les techniques connues de fabrication du papier, et ils sont appliqués dans les domaines de l'impression-écriture, des revêtements, des matières incombustibles, des supports d'emballage et des matériaux pour l'isolation thermique et phonique.

EP 0 031 760 A1

1

Nouveaux papiers contenant du ciment, leur procédé de préparation et leurs applications.

La présente invention concerne de nouveaux papiers contenant du ciment.

Les papiers sont des objets en forme de feuilles contenant au moins un type de fibres et obtenus par une technique dite papetière, caractérisée en ce que l'on réalise une dispersion de la (ou des) fibre dans un milieu généralement aqueux, qu'on y ajoute des ingrédients nécessaires tels que des charges et un agent de collage, que l'on flocule ces divers éléments puis que l'on égoutte le mélange obtenu par exemple en le répandant sur une toile convenable.

Il a été trouvé, et c'est là l'objet de la présente invention, que l'adjonction au mélange à égoutter, presser et sécher, selon la technique papetière, de ciment permettait une modification dans un sens favorable des propriétés du papier obtenu et permettait, pour certains types de papier, l'obtention de propriétés nouvelles techniquement intéressantes.

Ainsi selon la présente invention, on remplacera totalement ou partiellement, en utilisant les techniques classiques de fabrication du papier, la charge minérale, ordinairement employée , par un ciment hydraulique ou par un mélange de ciments hydrauliques.

Par définition un liant hydraulique est un matériau minéral en poudre qui forme, avec l'eau, une pâte faisant prise et durcissant progressivement, même à l'abri de l'air. Les ciments sont des liants hydrauliques formés de constituants anhydres, cristallisés ou vitreux renfermant essentiellement de la silice , de l'alumine et de la chaux et dont le durcissement est dû à la formation, par combinaison de ces éléments anhydres avec l'eau, de silicate et

**0031760**

d'aluminates de calcium hydratés très peu solubles dans l'eau. On sait que les constituants de base des divers ciments sont le clincker Portland, le laitier pour cimenterie, la pouzzolane (naturelle ou artificielle), la cendre volante de houille, la cendre volante de lignite et les fillers.

On pourra dans la présente invention utiliser n'importe quel type de ciment ou un mélange de ciments ; le ciment le plus couramment employé étant le ciment PORTLAND.

Ces ciments sont des matériaux connus, il est utile d'utiliser des ciments formés de particules très fines, lesdits ciments devant contenir au moins 95 % en poids de particules de dimensions moyennes inférieures à environ 150 microns ; on utilisera de préférence des ciments dont au moins 50 % des particules ont des dimensions moyennes inférieures à 80 microns.

Les quantités de ciments que l'on peut utiliser varient selon les produits visés. Il semble que pour obtenir des propriétés modifiées on doive employer au moins environ 10% de ciment par rapport au mélange de base (fibre + charge et/ou ciment) alors qu'au delà de 80 % de ciment (par rapport au mélange de base) les papiers acquièrent une rigidité excessive.

On peut remarquer que dans l'invention le ciment est employé dans des conditions tout à fait particulières. En effet compte tenu de l'importance décisive que l'on attache au phénomène d'hydratation du ciment dans ses applications connues on s'efforce toujours de contrôler très étroitement les conditions de cette hydratation et notamment les quantités relatives de ciment et d'eau. Or dans les utilisations du ciment dans la présente invention ledit ciment se trouve toujours en présence, pendant une durée notable, de quantités d'eau importantes. On peut donc penser que compte tenu de ces conditions d'hydratation et également des conditions de séchage ultérieures du mélange, les phénomènes d'hydratation et de prise du ciment ne sont pas identiques, dans le cadre de la présente invention et dans les utilisations classiques des ciments.

La technique classique de préparation du papier comporte les phases suivantes :
- préparation d'une suspension aqueuse de fibres cellulosiques,
- introduction de charge minérale,
- adjonction d'un agent de collage (hydrofugeant),
- adjonction d'un agent floculant plus communément appelé agent de rétention,
- égouttage, pressage humide et séchage.

On peut distinguer schématiquement trois types de procédés :
- un procédé en milieu neutre (pH $\geqslant$ 6) dans lequel en plus d'agent de collage et d'agent floculant connus et appropriés on emploi généralement comme charge de la craie,
- un procédé en milieu acide (pH $<$ 6) dans lequel en plus d'agent de collage et d'agent floculant connus et appropriés on emploi généralement comme charge du talc ou du kaolin.
- un procédé modifié dans lequel en plus des constituants mentionnés ci-dessus on utilise un liant organique ou minéral tel que par exemple un amidon ou un latex, et ou la floculation est avantageusement réalisée en deux stades.

0031760

Dans ces trois procédés on peut remplacer totalement ou partiellement la charge par le ciment.

On donne ci-après des exemples démontrant l'influence du ciment dans les papiers obtenus par les techniques papetières classiques ci-dessus.

Exemple 1

Utilisation de la technique classique en milieu neutre.

Les résultats comparatifs obtenus en remplaçant dans cette technique les 20 % en poids de craie par 20 % en poids de ciment PORTLAND sont rapportés dans le tableau I.

Dans ce tableau les diverses abréviations ont les significations suivantes :

| | |
|---|---|
| $F_1$ | résineux kraft blanchi |
| $F_6$ | feuillu kraft blanchi |
| $°SR\ 20$ | degré Schopper |
| Hydrofugeant en milieu neutre | |
| Floculants $P_1$, $P_{18}$ et ou $P_5$ | |

Les résultats donnés dans ce tableau 1 font apparaitre notamment des gains substantiels sur la traction, la résistance à l'éclatement, la résistance à la déchirure, le scott Bond pour les papiers contenant du ciment par rapport au papier contenant de la craie.

Exemple 2

Utilisation de la technique classique en milieu acide.

Les résultats comparatifs en remplaçant dans cette technique les 20 % ou 40% en poids de talc par 20 % ou 40 % en pois de ciment PORTLAND sont rapportés dans le tableau 2.

0031760

5

Dans ce tableau les diverses abréviations ont les significations précédemment données (ex.1) notons que l'on utilise notamment comme hydrofugeant: $H_2$ ou $H_4$.

Les résultats donnés dans ce tableau II font apparaître certaines améliorations des propriétés du papier lorsque l'on remplace le talc par du ciment.

Exemple 3

Utilisation d'une technique avec le liant organique (amidon) et adjonction de l'agent floculant en deux étapes.

Les résultats obtenus en utilisant cette technique et en remplaçant la charge par du ciment sont rapportés dans le tableau III.

Si on compare la technique ciment classique (milieu acide à 40 % de ciment- tableau II e) avec la technique à floculation en deux stades avec liant organique, on constate une amélioration nette de l'adhésion interne, de l'indice d'éclatement et de la résistance à la déchirure.

Il est clair que si le ciment est susceptible de conférer à des papiers certaines propriétés particulières, la technique préférée de fabrication d'un papier contenant un ciment est la technique dans laquelle on utilise un liant organique ou minéral et où, de préférence, la floculation des ingrédients est réalisée en deux stades.

L'utilisation de cette technique est particulièrement souhaitable lorsque l'on veut préparer des papiers contenant des quantités notables de ciment (ou de mélanges de ciments) qui sont les produits les plus intéressants dans le cadre de la présente invention. C'est ainsi que l'on pourra préparer sans difficulté notable, avec une bonne floculation des papiers qui contiendront avantageusement d'environ 40 à environ 70 % en poids , par rapport au mélange de base constitué par les fibres, le ciment et éventuellement la charge minérale, de ciment.

On a déjà décrit dans l'art antérieur des produits en feuilles, du type papier, contenant des liants hydrauliques et notamment du ciment. C'est le cas dans le brevet français 2 377 883. Mais les produits préparés selon ce brevet français 2 377 883 contiennent toujours des quantités notables d'au moins un polymère thermofusible et sont destinés à être, avant utilisation, portés à température élevée de façon à provoquer la fusion dudit polymère et, grâce à cette fusion, à assurer une liaison convenable entre les divers ingrédients qui constituent le matériau en feuille.

Dans la présente invention au contraire la liaison entre les divers ingrédients qui constituent le matériau en feuille est assuré à l'aide d'un liant (en particulier d'un liant organique) qui précipite lors de l'opération de floculation sans intervention de la température.

Il est connu que les papiers, obtenus par les techniques papetières dites classiques ont reçu récemment des applications nouvelles dans les domaines notamment des revêtements de sol, des matériaux incombustibles et/ou des matériaux d'isolation thermique et phonique. Les papiers obtenus selon la présente invention présentent, dans ces nouvelles applications des papiers, des avantages notables.

Les "papiers contenant du ciment" peuvent être réalisés en prenant pour base n'importe quel type de fibres. On peut notamment citer les fibres organiques naturelles (telles que les fibres cellulosiques, les fibres de cuir, les fibres vénégates) et synthétiques (telles que les fibres de polyamides, de polyalkylènes et de polyesters), et les fibres minérales (telles que les fibres de verre, de céramique, de sulfate de calcium et de carbone) et les fibres métalliques. On peut bien entendu utiliser des mélanges de ces fibres ainsi que les fibres de récupération de vieux papiers et de textiles. Les fibres utilisables ont 0,1 à 8 mm de longueur (par exemple : 0,2-3 mm pour les fibres cellulosiques, 3-6 mm pour les fibres de verre et 0,1-0,3 mm pour les fibres de laine de roche). L'utilisation de fibres de sulfate de calcium et en particulier de fibres de gypse aciculaire demande au préalable une saturation des eaux de dilution en sulfate de calcium (2 à 3 g/l) afin de ne pas dissoudre lesdites fibres dans la suspension du mélange de base.

A titre d'illustration un certain nombre de fibres utilisables a été donné dans le tableau IV. Les fibres cellulosiques utilisées seules ou en association avec d'autres fibres auront un degré SCHOPPER-RIEGLER (°SR) compris entre 15 et 65.

Les fibres préférées sont les fibres cellulosiques dans le cas où on ne recherche pas à réaliser un matériau incombustible, car bien que relativement onéreuses, elles sont encore moins chères que les autres fibres.

0031760

On sait que l'utilisation de fibres de Polyalkylène (notamment les fibres de Polyéthylène et de Polypropylène) permet de renforcer la solidité de l'ensemble (cohésion interne notamment) et la stabilité dimensionnelle.

En effet, ces fibres qui fondent ou se ramollissent à 120-200°C permettent de renforcer les caractéristiques (adhésion à l'état sec et humide , stabilité dimensionnelle) de diminuer la quantité de liant et le cas échéant, la quantité de fibres de verre à utiliser , de favoriser l'égouttage.

Pour la réalisation de panneaux de revêtement , l'utilisation d'un liant hydraulique permettra la diminution partielle ou la suppression des fibres de polyalkylène sans affecter la cohésion interne et la stabilité ; quand les fibres de polyalkylène seront présentes dans la composition, on pourra avantageusement faire appel aux mélanges fibres cellulosiques-fibres de Polyéthylène (15-5) en poids et au mélange fibres cellulosiques-fibres de polyéthylène-fibres de verre (15-5-2) en poids.

Pour l'obtention de matériaux incombustibles on choisira de préférence des fibres minérales ; fibres de verre, de céramique, de sulfate de calcium, ou les fibres métalliques par exemple.

Si selon l'invention le ciment peut remplacer totalement ou partiellement les charges papetières classiques il est également possible dans certaines applications d'utiliser simultanément le ciment et diverses charges.

0031760

Parmi les charges minérales utilisables, on peut notamment mentionner celles qui interviennent de façon courante dans l'industrie papetière, à savoir le talc, le kaolin, le carbonate de calcium, le carbonate de magnésium, le sulfate de baryum, les silicates d'aluminium, mais aussi la silice, l'alumine hydratée ou non hydratée, l'oxyde de magnésium, la chaux , l'oxyde de zinc, les silicates alcalins de potassium et de sodium, les silicates de calcium, les aluminates de calcium, les silico-aluminates de calcium, les silicates magnésiens, les ferrites de calcium, les alumino-ferrites. On choisira de préférence des charges minérales avec au moins 50% de particules inférieures à 50 microns.

On pourra utiliser jusqu' à 85 parties de charges minérales pour 100 parties du mélange de base.

Un certain nombre de charges minérales non liantes utilisables a été relevé dans le tableau V ci-joint, à titre d'illustration.

Le liant organique sera d'origine naturelle ou synthétique. Parmi les liants qui conviennent on peut notamment citer ceux du tableau VI ci-après.

On sait que les papiers utilisables dans certaines applications contiennent des liants minéraux ou organiques. Le ciment, qui est un liant hydraulique peut remplacer totalement ou partiellement lesdits liants. Ainsi les papiers qui contiennent du ciment pourront également contenir des liants minéraux du type mono aluminium phosphate ou du type silicate de soude pour l'obtention d'un matériau incombustible par exemple ou combiné à un liant organique à faible dose. De façon avantageuse on utilisera 0,2 à 30 parties en poids sec de liant pour 100 parties en poids du mélange de base.

Dans le domaine des supports d'impression-écriture et des papiers spéciaux, le liant le plus intéressant est l'amidon qui est un produit constitué d'une substance polymère à chaine linéaire, l'amylose et d'une substance polymère tridimensionnelle l'amylopectine et plus particulièrement l'amidon renfermant 50 à 6000 motifs anhydroglucose (dans le polymère linéaire ) par molécule, et les amidons modifiés par voie chimique ou enzymatique (esters phosphoriques d'amidon carboxyméthylé et amidon dégradé enzymatiquement) qui renferment 50 à 3000 motifs anhydroglucose par molécule.

Dans le domaine des revêtements, les liants préférés sont l'amidon comme indiqué ci-dessus, les latex, notamment les latex acryliques tels que L9 et L 10 et les latex styrènes butadiènes tels que L 12 et L 13 (voir tableau V et IX) , et les bentonites.

Les papiers selon l'invention peuvent également comporter, du fait de la présence de ciment, des adjuvants susceptibles de modifier les propriétés dudit ciment et notamment :

- les accélérateurs de prise : ces adjuvants solubles dans l'eau modifient les solubilités et la vitesse de dissolution des constituants du ciment. Ce sont par exemple le chlorure de sodium , d'aluminium, d'ammonium, de fer, les bases alcalines et leurs sels : carbonates, silicates, aluminates, borates de soude ou de potasse, le nitrite ou nitrate de calcium, la triethanolamine, l'acide oxalique, le fluosilicate de sodium.

- les retardateurs de prise : ce sont très souvent des composants organiques. On peut notamment citer: les lignosulfonates de calcium, de sodium, d'ammonium, les acides et sels d'acides hydroxycarboxyliques, les hydrates de carbone de formule générale -Cn$(M_2O)$ m, les sucres et l'acide phosphorique les sels de magnésium, les phosphates et fluorures, la glycérine, le borax.

Le gypse peut aussi être considéré comme un retardateur de prise.

- les plastifiants et fluidifiants à caractére anionique ou non ionique : on peut notamment mentionner les savons de résine ou d'abietate alcalin, les lignosulfonates sodiques ou calciques, les alkylarylsulfonate, les esters de polyglycol.

On pourra utiliser entre 2 et 30 parties d'adjuvants pour 100 parties en poids de ciment.

Les papiers selon l'invention comportent également des adjuvants classiques en papeterie tels que les agents hydrofugeants (également appelés agents de collage), les agents de rétention, les agents lubrifiants , les agents anti-mousse ou brise mousse, les azurants optiques, les colorants de nuançage, les agents de résistance à l'état humide et les antibiotiques. Ils contiennent également au moins un agent floculant minéral ou organique, naturel ou synthétique.

Le floculant peut être utilisé de façon connue. Il peut également,de façon avantageuse, et notamment pour la préparation de certaines qualités de papier, être introduit en deux stades d'une part avant l'ajout à la suspension du liant organique ou minéral et d'autre part, après l'ajout dudit liant.

0031760

Avant l'ajout du liant le floculant permet(i) la cationisation du milieu et la précipitation du liant hydraulique et des charges minérales non liantes quand celles-ci sont présentes et des fibres et (ii) la floculation du liant. Après l'ajout du liant, il complète la floculation de celui-ci, renforce la cohésion des flocs, améliore la rétention globale et favorise l'égouttage.

Bien entendu, on peut utiliser soit le même agent floculant avant et après l'ajout du liant organique et/ou minéral, soit encore des agents floculants différents, soit enfin des mélanges d'agents floculants. Parmi les floculants qui conviennent , on peut notamment mentionner les sels métalliques, tels que les sels d'aluminium, de fer (II) de fer (III) de zinc et de chrome tels que les halogénures, sulfate, les silicates de soude et les autres substances indiquées dans le tableau VII.

Le silicate de soude dans le processus de fabrication peut jouer le rôle d'accélérateur de prise, de liant minéral et d'agent de floculation. Le floculant préféré selon la mise en oeuvre de l'invention décrite ci-dessus est le polychlorure d'aluminium associé à du sulfate d'alumine ou du silicate de soude. Cette dernière combinaison peut également engendrer une expansion du mélange de base donc une augmentation de l'épaisseur du matériau. Cette action est favorable à la réduction de la densité et du coût au m2. De façon avantageuse, on utilisera 0,02 à 10 parties d'agent floculant pour 100 parties en poids du mélange de base sans silicate de soude, ou de 2 à 30 parties en poids d'agent floculant avec silicate de soude.

Dans le cadre de la mise en oeuvre de l'invention où le floculant est ajouté en deux stades, l'agent hydrofugeant (dont on a donné une liste non limitative dans le tableau VIII) est avantageusement ajouté au mélange après le liant organique mais avant l'adjonction de la deuxième fraction du floculant ; la quantité d'agent hydrofugeant utilisé est comprise entre 0,05 et 10 parties, avantageusement entre 0,05 et 5 parties et de préférence entre 0,1 et 3 parties en poids sec pour 100 parties en poids du mélange de base, les agents hydrofugeants préférés étant les substances H1 et H4 du tableau VIII.

Les tableaux IX,X, XI, et XII donnent de façon non limitative les listes et numéro de code de divers produits utilisés ou utilisables selon l'invention.

- le tableau IX concerne des liants utilisables dans le traitement de surface,
- le tableau X concerne des produits spéciaux utilisables dans les traitement de surface.
- le tableau XI mentionne certains produits auxiliaires,
- le tableau XII donne une liste des liants hydrauliques (ciments) utilisables.

On a décrit précédemment l'emploi des ciments dans les procédés dits "classiques" de préparation de papier ; on indique ci-après un procédé particulier de préparation de papiers divers contenant du ciment, ce procédé étant spécialement intéressant car il permet de résoudre certains problèmes venant de la floculation du ciment. Ce procédé se déroule en deux stades :

STADE 1

On met les fibres en suspension à 10-50 g/l et en particulier 20-50 g/l dans l'eau (si on utilise des fibres cellulosiques, celles-ci auront été préalablement défibrées et raffinées à un degré SR de 15 à 65 ; si on utilise des fibres de sulfate de calcium celles-ci seront mises en suspension dans de l'eau saturée en sulfate de calcium (2 à 3 g/l) et toutes les eaux de dilution seront également saturées en sulfate de calcium ; si on utilise des fibres d'une autre nature (fibres minérales, organiques synthétiques) celles-ci seront soit défibrées séparément, soit dispersées sous forte agitation dans un cuvier renfermant les fibres cellulosiques raffinées quand celles-ci sont présentes ; pour certaines applications où le degré SR n'est pas très élevé (°SR inférieur à 35) il peut être avantageux de raffiner ensemble les fibres cellulosiques et les fibres organiques synthétiques. Quand elle est présente, la charge minérale sous forte agitation est mise en suspension dans l'eau à 300-600 g/l dans une deuxième cuve, puis mélangée avec les fibres (une partie de la charge minérale peut provenir, le cas échéant, de la réinsertion de papiers déjà chargés tels que les vieux papiers et les cassés machine). A ce stade on introduit le liant hydraulique en discontinu ou en continu (si tous les autres adjuvants le sont également) pour constituer le mélange de base qui à ce stade a une concentration entre 50 et 100 g/l. Il est important de maintenir ce mélange de base sous agitation. La suspension étant fortement alcaline (pH = 11-13) il est également recommandé de prendre des précautions pour le choix du matériel (cuve, tuyauteries inox de préférence).

Le floculant minéral ou synthétique généralement cationique(de préférence $P_2$, $P_8$ ou $P_9$), est dilué dans l'eau 1 à 10 fois puis est introduit dans le mélange constitué par les fibres, la charge minérale non liante et le liant hydraulique, à la dose de 0,01 à 5 parties, notamment 0,01 à 3 parties en l'état pour 100 parties en poids du mélange de base. Le floculant peut être ajouté en discontinu ou de préférence en continu.

Le liant organique, de préférence l'amidon natif, après avoir été préalablement cuit à 80-90°C à concentration entre 100 et 300 g/l ou un latex en émulsion aqueuse, ou le liant minéral de préférence du silicate de soude, ou le mono aluminium phosphate est alors incorporé dans le mélange sous agitation, à une concentration comprise entre 5 et 200 g/l soit en discontinu soit de préférence en continu, dans les circuits de tête avant les autres adjuvants.

Peuvent alors être incorporés, soit en discontinu dans un cuvier de mélange, soit en continu dans les circuits de tête: un agent d'hydrofugation, de résistance à l'état humide, un agent d'azurage et/ou des colorants de nuançage, un agent anti-mousse ou brise-mousse, les agents antibiotiques et éventuellement le lubrifiant. A ce stade, on peut également introduire des agents auxiliaires du ciment comme notamment un accélérateur ou retardateur de prise. On incorpore de nouveau avant la caisse de tête l'agent floculant qui, à ce stade est généralement minéral. On utilisera par exemple le polychlorure d'aluminium avec ou sans sulfate d'alumine et avec ou sans le silicate de soude (à la dose de 1 à 8 parties en poids pour 100 parties du mélange de base sans silicate de soude ou de 2 à 30 parties en poids du mélange de base avec silicate de soude utilisé comme floculant), le ou les floculants combinés ajoutés après le liant organique favorisent nettement la floculation, la rétention, l'augmentation de l'épaisseur (avec silicate) et l'égouttage.

La suspension résultante est essorée sur la toile d'une machine à papier. La nature de la toile aura un rôle important sur la rétention en fonction du grammage de la feuille et de la

vitesse de fabrication, On peut, par exemple, utiliser des toiles avec des armatures uni, tricot, retors simple. On pourra utiliser par exemple des toiles de tissu uni 28x22 cm, 28x24 cm, 32x26 cm, 36x32 cm, ou des toiles maillons 26x25 cm, 28x27 cm.

Après formation de la feuille, on procède à un pressage classique en partie humide au moyen d'une ou plusieurs presses coucheuses, presses montantes, presses offset ou presses multiples, les presses étant habillées ou nues.

Pour le remplacement de l'amiante et pour des épaisseurs de matériaux supérieures à 400 microns le pressage pourra être effectué sous une charge linéaire faible 0,2 à 35 kg/cm. Puis on procède au sèchage et si nécessaire aux opérations complémentaires telles que lissage, calendrage, grainage, sur machine à papier ou hors machine à papier.

La feuille fibreuse obtenue peut avoir un grammage variable en fonction des applications recherchées.

STADE 2

A ce stade le papier obtenu est soumis à un ou plusieurs traitement sur la machine ou en dehors de celle-ci. Ce(ou ces) traitement consiste à déposer certains matériaux sur le papier de façon à lui conférer les propriétés complémentaires souhaitées.

Lorsque l'on veut obtenir des matériaux incombustibles on doit bien évidemment choisir lesdits traitements de façon à ne pas altérer les propriétés fondamentales de ces matériaux. On peut mentionner notamment les traitements à l'aide d'une charge minérale (celles pouvant être employées au stade 1 et en particulier l'alumine hydratée, l'hydroxyde de magnésium) combinée à un liant minéral (notamment le silicate de soude, l'oxyde de magnésium et le chlorure de magnésie) et divers agents auxiliaires, notamment les dispersants, les stabilisants, les colloïdes protecteurs, les agents de résistances superficielles.

Ces produits généralement organiques sont introduits dans le bain en très faible quantité (0,1 à 5 parties en poids sec pour 100 parties de pigments) et de ce fait ne modifient pas la résistance au feu du matériau.

On peut également utiliser, pour ces traitements de surface des matériaux incombustibles, de la bentonite utilisée sous forme de gel. Un tel traitement de surface à l'avantage non seulement d'augmenter la résistance de surface du papier mais également de conférer une certaine qualité (glissement) à ladite surface. On peut de la même façon et pour le même but employer des mélanges de bentonite et de silicate de soude.

Les exemples non limitatifs suivants illustrent l'invention.

Exemples 4 à 17 (Revêtements de sols )-(Tableaux XIII et XIV)

Exemple de matériaux pouvant être notamment utilisés comme revêtement de sols, en remplacement de l'amiante, à grammages habituels 400 à 800 g/m2 pour des épaisseurs variables entre 35 et 80/100 de millimètres).

Exemple 4 :

Le matériau minéral réalisé selon le procédé décrit dans la demande française n°78/18447 du 20 juin 1978, est pris comme témoin : support pour revêtement de sol, renfermant des fibres de polyéthylène, mais pas de liant hydraulique.

Cette feuille minérale en 500 g/m2 se caractérise par (mesures après thermoconsolidation 3' à 180°C pour simuler le traitement calorifique au cours de l'enduction PVC chez le transformateur) :

- une densité de 0,8 - 0,9,

- une résistance à la traction(Test sur Lhomargy Bande de 15cm de long et 1,5 cm de large) entre 5 et 8 kgs,

- un allongement à la rupture de2-5% sens marche et de 3 à 10% sens travers,

- une variation dimensionnelle après 24 h. d'immersion dans l'eau à 23°C, inférieure à 0,5% (sens travers du matériau),

- une adhésion interne à l'état sec (mesure sur appareil Scott Bond) de 100-200,

- un taux de cendres de 60-70 %.

Exemples 5 - 6 - 7

Le remplacement de la charge minérale par le liant hydraulique renforce l'adhésion interne (exemple 5 : Scott Bond = 250-300) ce qui permet de réduire de 50 % ( exemple 6 Scott 200-250) et voire même de supprimer les fibres de polyéthylène (exemple 7 - Scott = 150-200) en conservant toutes les autres caractéristiques inchangées.

Ces 2 solutions plus économiques en F/m2 donnent un matériau légèrement moins souple que le témoin.

Exemples 8 - 9 - 10

On reprend les compositions du stade 1 des exemples 5 - 6 - 7 et on applique un traitement de surface en size-press sur machine à papier afin:

- d'améliorer l'aspect, l'uni de surface pour une meilleure aptitude à l'enduction PVC chez le transformateur,

- diminuer le pouvoir absorbant vis-à-vis de l'eau et éventuellement des solvants et des plastifiants,

- réduire la tendance au peluchage (meilleur liage en surface) pour éviter les points durs à l'enduction PVC.

- conférer l'imputrescibilité (résistance aux champignons et aux bactéries) puisque la masse n'est pas traitée.

Les traitements de surface au stade 2 peuvent être du type de ceux déjà mentionnés dans les demandes françaises n° 78/18447 et 79/01833.

On pourra utiliser les bains size-press suivants: Type de traitement n° 1

- Latex acryliques (Polymère L9 ou L10) :

100 parties en poids en l'état:

- charges minérales (C 2) ; 30 parties en poids
- Agents auxiliaires (A 10) : 0,1 partie en poids
- hydrofugeants (H2) : 5 parties en poids en l'état.
- 2-(Thiocyanomethylthio)-Benzothiazole : 1000 à 2000 g pour une tonne de matériau fabriqué.
- Zinc pyridinethione : 1000 à 2000 g pour une tonne de matériau fabriqué.
- Lubrifiant (A 9 ) : 0,5 partie en poids en l'état.
  Reprise sèche 16 à 25 g/m2.

Type de traitement n° 2

L'hydrofugeant H2 peut être remplacé par l'hydrofugeant H1.

Type de traitement n° 3

- charges minérales (C 2 ) : 100 parties en poids
- auxiliaires (A 1) : 0,3 partie en poids
- auxiliaires (A 2) : 0,15 partie en poids
- auxiliaires (A 10) : 0,10 partie en poids
- Liant de surface (L 6) : 50 parties en poids
- bactéricide et fongicide comme le traitement 1
  Reprise sèche 15 à 25 g/m2

Type de traitement n° 4

charges minérales C 2 : 70 parties en poids
charges minérales C 3 : 30 parties en poids
autres composants comme la formule 3

Type de traitement n° 5

- charges minérales (C 2) : 90 parties en poids
- (C 3) : 10 parties en poids
- auxiliaires (A 1) : 0,3 partie en poids
- (A 2) : 0,15 partie en poids
- (A10) : 0,10 partie en poids
- (A 3) : 0,5 partie en poids
  en l'état
- Liant de surface (L6 ) : 30 parties en poids
- (L13) : 15 parties en poids en l'état

-Hydrofugeant (H 8) : 2 parties en poids en l'état.

Reprise sèche 15 à 25 g/m2 sec.

Exemple 11

Composition identique à celle de l'exemple 10 mais on remplace le latex styrène butadiène par un latex acrylique pour favoriser la souplesse du matériau.

Exemple 12

On combine charges minérales et liant hydraulique avec un faible pourcentage de fibres de polyéthylène. Ce matériau minéral (cendres 60-70%  ) se caractérise également par de bonnes propriétés d'ensemble pour une utilisation comme support de revêtement de sols.

Exemples 13 et 14

On remplace le ciment de Portland avec 5-10% de laitier (exemple 12) par un ciment de Portland avec plus de 80%  · de laitier ou par du ciment alumineux.  Ces substitutions sont favorables à la rapidité de la prise, aux liaisons (le meilleur Scott Bond), mais le matériau obtenu est légèrement moins souple que celui de l'exemple 12.

Exemple 15

On remplace la fibre de verre par de la laine de roche et combine un latex acrylique et de l'amidon natif.  La laine de roche favorise l'égouttage.  Elle est 2 fois moins chère que la fibre de verre, mais 2 fois moins efficace pour la stabilité dimensionnelle à l'état humide.  Cette formule est plus économique que celle de l'exemple 12.

Exemple 16

Combinaison Talc - carbonate - liant hydraulique.

0031760

Exemple 17

Le remplacement du sulfate d'aluminium par du silicate de soude est favorable à l'épaisseur du matériau, à l'égouttage et à la rétention globale.

L'épaisseur est améliorée de 10 à 20 %

A noter pour les exemples 4 à 17 une bonne rétention globale, puisque les pertes matières au cours de l'égouttage sur la toile de la machine à papier sont inférieures à 10 % (généralement entre 4 et 8 % ), c'est-à-dire sensiblement équivalentes à celles mesurées sur la formule témoin avec uniquement des charges minérales non liantes. Exemples 18 à 29 (tableau XV).

Dans ces exemples on illustre la mise en oeuvre de l'invention pour la préparation de matériaux dont la caractéristique essentielle est la très bonne résistance à la température. Ces feuilles minérales incombustibles peuvent avoir des grammages variable: supérieure en général a 100 g/m2 et notamment entre 100 et 1000 g/m2

Pour ce type de matériau, le traitement de surface stade 2 est vivement recommandé afin, en particulier, d'augmenter les résistances aux frottements secs (réduction du poudrage).

Dans le domaine des revêtements incombustibles, on choisira notamment les traitements suivants :
- Traitement n° 6 en Size-Press :
   Liant minéral (L 24) : bain à 5 %
      reprise sèche en silicate de soude 6 à 15g/m2
- Traitement n° 7 en Size-Press :

charges minérales (C2) : 50 parties en poids
                    (C9) : 50 parties en poids

liant minéral (L 24) : 40 parties en poids en l'état

auxiliaires (A1) : 0,1 partie en poids (A2) : 0,3 partie en poids (A3) : 5 parties en poids en l'état.

Reprise sèche 10 à 30 g/m2 sec - Traitement n° 8 en Size-Press :

Bain de moro aluminium phosphate à 5 - 20 %

Exemple 30

On a réalisé un matériau incombustible particulièrement intéressant en utilisant :

- comme fibres : 15 parties de fibres céramiques,

- comme ciments : 85 parties de ciments PORTLAND à 70% de laitier,

- comme floculants : 3 parties de $P_7$ utilisées avant adjonction de liant et 0,5 partie de $P_2$ avec 5 parties de $P_{19}$ utilisées après ajout de liant.

- comme liant : 4 parties de fécule, et en utilisant 3 parties de bentonite activée.

Le papier obtenu peut être imprégné (size-press) ou enduit avec de la bentonite préparée sous forme de gel (contenant 3 à 15 % de bentonite dans l'eau.).

Exemples 30-31    - Tableau XVI

Le remplacement de la charge par du ciment est favorable à la rigidité ; ce résultat est intéressant pour les matériaux impression-écriture en général.

Ce résultat est illustré par les exemples 30 et 31 concernant un support impression écriture en 200 g/m2. Le traitement de surface est du type traitement n° 3 des exemples précédents.

Les caractéristiques physiques avec le liant hydraulique sont améliorées de 10 à 20 % et en particulier la rigidité.

0031760

TABLEAU I

| Exemple procédé papetie classique | Témoin milieu neutre + | Technique standard ciment-milieu reutre | | |
|---|---|---|---|---|
| Référence | A | B | C | D |
| $F_1$ 45% | standard + | + | + | + |
| $F_6$ 55% | + | + | + | + |
| °SR 20 | + | + | + | + |
| Craie ($C_3$) | 20 | 0 | 0 | 0 |
| Talc ($C_1$) | 0 | 0 | 0 | 0 |
| Ciment ($LH_6$) | 0 | 20 | 20 | 20 |
| $P_2$ avant | 0 | 0 | 0 | 0 |
| Collage (ou hydrofugation) en milieu neutre | $H_1$ | $H_1$ | $H_1$ | $H_1$ |
| $P_{18}$ | 0,3 | 0,3 | 0,3 | 0,3 |
| $P_1$ après | 0 | 0 | 0 | 0,5 |
| $P_5$ | 0,14 | 0,14 | 0,28 | 0 |
| Poids | 212 | 204 | 200 | 211 |
| Main | 1,75 | 1,66 | 1,62 | 1,59 |
| Porosité Afnor | 62,5 | 32,9 | 32,3 | 29,8 |
| Traction en Kg | 4,4 | 5,6 | 5,8 | 6 |
| Allongement en % | 1,9 | 4,7 | 4,6 | 4,4 |
| Indice Mullen | 10,6 | 15,8 | 16 | 16,3 |
| indice déchirure | 116 | 129 | 130 | 127 |
| Scott | 41,5 | 85 | 87 | 76 |
| Rigidité | 28 | 28 | 26 | 26 |

TABLEAU II

| Exemple procédé papetier classique | Témoin | avec ciment milieu acide | | témoin | avec ciment milieu acide |
|---|---|---|---|---|---|
| Références | A | B | C | D | E |
| Cariboo (fibres longues 45 | + | + | + | + | + |
| Alizang (fibres courtes 55 | + | + | + | + | + |
| °SR 20 | + | + | + | + | + |
| Craie | 0 | 0 | 0 | 0 | 0 |
| Talc ($C_1$) | 20 | 0 | 0 | 40 | 0 |
| Ciment ($LH_6$) | 0 | 20 | 20 | 0 | 40 |
| Collage(hydrofugation)en milieu acide | $H_2$ou $H_4$ | $H_2$ou $H_4$ | $H_2$ou $H_4$ | $H_2$ou $H_4$ | $H_1$ou $H_4$ |
| $P_1$ pour | pH 5,5 | pH5,5 | pH 5,5 | pH 5,5 | pH 5,5 |
| $P_2$ | 0 | 0 | 0,5 | 0 | 0,5 |
| $P_5$ | 0,14 | 0,14 | 0 | 0,14 | 0,14 |
| Poids | 204 | 200 | 138 | 193 | 200 |
| Main | 1,57 | 1,69 | 1,71 | 1,59 | 1,70 |
| Porosité Afnor | 24,7 | 36,8 | 33,4 | 24,9 | 46,1 |
| Traction en Kg | 6,7 | 7 | 6,2 | 5,3 | 5,7 |
| Allongement en % | 4,3 | 4,1 | 4,2 | 3,9 | 3,7 |
| IndiceMullen | 17,7 | 17 | 16,8 | 14,8 | 15,7 |
| Indice déchirure | 122 | 125 | 132 | 104 | 106 |
| Scott | 80 | 85 | 92 | 72 | 104 |
| Rigidité | 28,5 | 28,5 | 28 | 26 | 28 |

25

0031760

TABLEAU III

| Exemple 3<br>Procédé papetier avec<br>introduction floculant<br>en deux étapes | Milieu acide<br>avec ciment=<br>40 selon II E | Milieu<br>acide<br>avec ci-<br>ment =40 | Milieu<br>acide<br>avec talc<br>= 40 |
|---|---|---|---|
| Références | A | B | C |
| $F_1$ = 45 % | + | + | + |
| $F_6$ = 55 % | + | + | + |
| °SR = 20 | + | + | + |
| Talc (C 1) | 0 | 0 | 40 |
| Ciment $LH_6$ | 40 | 40 | 0 |
| $P_2$ avant | 0 | 0,3 | 0,3 |
| $L_1$ | 0 | 2 | 2 |
| Collage(hydrofugation)<br>en milieu acide<br>$P_1$ | $H_2$ ou $H_4$<br>$P_H$=5,5 | $H_2$ou $H_4$<br>$P_H$=5,5 | $H_2$ ou $H_4$<br>$P_H$ =5,5 |
| $P_2$ après | 0,5 | 0,5 | 0,5 |
| $P_5$ | 0,14 | 0,14 | 0,14 |
| Poids | 200 | 202 | 202 |
| Main | 1,70 | 1,63 | 1,58 |
| Porosité(Afnor) | 46,1 | 43 | 37 |
| Traction (kg) | 5,7 | 7,1 | 6,2 |
| Allongement (%) | 3,7 | 4,8 | 4,7 |
| Indice Mullen | 15,7 | 21 | 17,1 |
| Indice de déchirure | 106 | 129 | 115 |
| Scott | 104 | 135 | 92 |
| Rigidité Taber | 28 | 30 | 27 |

## TABLEAU IV

| Références | Type de Fibres |
|---|---|
| F1 | Résineux Kraft blanchi |
| F2 | Résineux Kraft mi-blanchi |
| F3 | Résineux Kraft écru |
| F4 | Résineux bisulfite blanchi |
| F5 | Résineux bisulfite écru |
| F6 | Feuillus Kraft blanchi |
| F7 | Feuillus Kraft mi-blanchi |
| F8 | Pâte mécanique blanchie |
| F9 | Pâte mécanique écrue |
| F10 | Fibres de récupération |
| F11 | Pâte de plantes annuelles |
| F12 | Fibres de rayonne |
| F13 | Fibres de polyéthylène(de préférence 0,8 à 1 mm. de longueur) |
| F14 | Fibres de verre (de préférence à 15 mu de diamètre et 3 à 6 mm. de longueur) |
| F15 | Fibres de polypropylène (de préférence 0,8 à 1 mm. de longueur). |
| F16 | Laine de roche (de 0,1 à 0,3 mm. de longueur |
| F17 | Fibres de sulfate de calcium ou gypse aciculaire (de préférence 0,5 à 3mm de longueur) |
| F18 (+) | Fibres de céramique (diamètre moyen des fibres 1-10 mu - longueur initiale 3 mm à 300 mm) |
| F19 | Fibres de carbone (fibres coupées entre 1-10 mm) |
| F20 | Fibres métalliques |

(+) les fibres sont coupées au défibrage, afin d'obtenir une longueur papetière 3 mm à 10 mm.

## TABLEAU V

### CHARGES MINERALES POUVANT ETRE UTILISEES

| REFERENCES | TYPE DE CHARGE |
|---|---|
| C 1 | Talc : Silicate de magnésium complexe - Particules de 1 à 50 $\mu$ de préférence 2 à 50 $\mu$ - Poids spécifique de 2,7 à 2,8 |
| C 2 | Kaolin : Silicate d'aluminium hydraté complexe - Particules de 1 à 50 $\mu$, de préférence de 2 à 50 $\mu$ - Poids spécifique 2,58 - |
| C 3 | Carbonate de calcium naturel : Particules de 1,5 à 20 $\mu$ , de préférence 2 à 20 $\mu$ - Poids spécifique : 2,7 - |
| C 4 | Carbonate de calcium précipité : Particules de 1,5 à 20 $\mu$ de préférence 2 à 20 $\mu$ - Poids spécifique : 2,7 |
| C 5 | Sulfate de baryum naturel : Particules de 2 à 50 $\mu$ - Poids spécifique environ 4,4 - 4,5 |
| C 5 | Sulfate de baryum précipité : Particules 2 à 20 $\mu$ - Poids spécifique environ 4,35 |
| C 6 | Silica de diatomées : Particules de 2 à 50 $\mu$ - Poids spécifique environ 2 à 2,3 |
| C 7 | Blanc satin : sulfoaluminate de calcium hydraté |
| C 8 | Sulfate de calcium naturel : Particules de 2 à 50 $\mu$ - Poids spécifique environ 2,32 - 2,96 - |
| C 9 | Alumine hydratée : Particules de 2 à 50 $\mu$ |

0031760

TABLEAU V (suite)

CHARGES MINERALES POUVANT ETRE UTILISEES

| Références | Type de charge |
|---|---|
| C 10 | Aluminate de sodium et de calcium: Particules de 1 à 20 μ - Poids spécifique 2,2 |
| C 11 | Silicoaluminate de sodium : Particules de 1 à 20 μ - Poids spécifique environ 2,12 |
| C 12 | Titane rutile : Particules de 0,5 à 10 μ - Poids spécifique environ 4,2 |
| C 13 | Titane anatase : Particules de 0,5 à 10 μ - Poids spécifique environ 3,9 |
| C 14 | Mélange Cl - C6 (70:30) en poids |
| C 15 | Mélange Cl - C3 (50:50) en poids |
| C 17 | Mélange Cl - Cl2 (95:5) en poids |
| C 18 | Hydroxyde de magnésium : Particules de 2 à 50 μ |

Note : Le poids spécifique est exprimé en g/ml.

TABLEAU VI

LIANTS POUVANT ETRE UTILISES

| Références | TYPE DE LIANT |
|---|---|
| L 1 | Fécule native |
| L 2 | Amidon natif notamment amidon de maïs natif |
| L 3 | Ester phosphorique d'amidon (type Retamyl AP ou Retabond/2) |
| L 4 | Amidon carboxyméthylé |
| L 5 | Fécule oxydée |
| L 6 | Fécule enzymée (enzyme :$\alpha$ amylase, pour l'obtention d'une répartition des unités glucose variables entre 50 et 3000) (pour le polymère linénaire amylose) |
| L 7 | Amidon hydroxyméthylé |
| L 8 | Carboxyméthylcellulose technique (5 à 30 % de chlorure de sodium - degré de substitution : 0,7 - 0,8 |
| L 9 | Polymère renfermant 87 à 90 parties en poids de motif acrylate d'éthyle, 1 à 8 parties en poids de motifs acrylonitrile, 1 à 6 parties en poids de motif N-méthylolacrylamide et 1 à 6 parties en poids de motif acide acrylique. Dispersion aqueuse à 40 - 55% |
| L 10 | Polymère renfermant 60 à 75 parties en poids de motif acrylate d'éthyle, 5 à 15 parties en poids de motif acrylonitrile, 10 à 20 parties en poids de motif acrylate de butyle 1 à 6 parties en poids de motif N-méthylolacrylamide. Dispersion aqueuse à 40-55 % |
| L 11 | Polymère renfermant 60 à 65 parties en poids de motif butadiène, 35 à 40 parties en poids de motif acrylonitrile et 1 à 7 parties en poids de motif acide méthacrylique. Dispersion aqueuse à 40-55 % |
| L 12 | Polymère renfermant 38 à 50 parties en poids de motif styrène, 47 à 59 parties en poids de motif butadiène et 1 à 6 parties en poids de motif méthylacrylamide. Dispersion aqueuse à 40 - 55 % |
| L 13 | Polymère renfermant 53 à 65 parties en poids de motif styrène, 32 à 44 parties en poids de motif butadiène, et 1 à 6 parties en poids de motif méthylacrylamide. Dispersion aqueuse à 40 - 55 % |

0031760

TABLEAU · VII

| Références : | Type de floculants |
|---|---|
| P 1 | Sulfate d'aluminium· |
| P 2 | Polychlorure d'aluminium (hydroxychlorure d'aluminium) |
| P 3 | Aluminate de sodium et de calcium |
| P 4 | Mélange d'acide polyacrylique et de polyacrylamide en solution à 5 - 30 % (poids/voulume) |
| P 5 | Polyéthylèneimine en solution à 2 - 50 % (poids/volume) |
| P 6 | Copolymère d'acrylamide et de β-méthacrylyloxy-éthyltriméthylammonium méthylsulfate. |
| P 7 | Résine polyamine-épichlorhydrine et de diamine-propylméthylamine en solution à 2 - 50 % |
| P 8 | Résine polyamide-épichlorhydrine fabriquée à partir d'épichlorhydrine, d'acide adipique de ca-prolactame, de diéthylènetriamine et/ou d'éthy-lènediamine, en solution à 2-50 % |
| P 9 | Résine polyamide - polyamine-épichlorhydrine fabriquée à partir d'épichlorhydrine, d'ester diméthylique d'acide adipique et de diéthylène-triamine, en solution à 2-50 % |
| P 10 | Résine polyamide-épichlorhydrine fabriquée à partir d'épichlorhydrine, de diéthylènetria-mine, d'acide adipique et d'éthylèneimine. |
| P 11 | Résine polyamide-épichlorhydrine fabriquée à partir d'acide adipique, de diéthylènetriamine et d'un mélange d'épichlorhydrine et de dimé-thylamine en solution à 2 - 50 % |
| P 12 | Résine polyamide-polyamine cationique fabriquée à partir de triéthylènetriamine. |
| P 13 | Produits de condensation d'acides sulfoniques aromatiques avec le formaldéhyde |
| P 14 | Acétate d'aluminium |
| P 15 | Formiate d'alumunium |
| P 16 | Mélange d'acétate, sulfate et formiate d'aluminium |
| P 17 | Chlorure d'aluminium (AlCl$_3$) |
| P 18 | Amidon cationique |
| P 19 : | Silicate de soude |

Note : Lorsqu'il est question de solutions, il s'agit de solutions aqueuses.

TABLEAU VIII

HYDROFUGEANTS POUVANT ETRE UTILISES

| Références | Type d'hydrofugeants |
|---|---|
| H 1 | Alkylcétène dimère en solution à 5 - 12 % (poids/volume) |
| H 2 | Emulsion de paraffine-cire à 45-55% (poids/volume) |
| H 3 | Colophane |
| H 4 | Colophane modifiée (avec ou sans paraffine) en émulsion aqueuse à 20-50 % (poids/volume) |
| H 5 | Anhydride d'acides dicarboxyliques en solution ou disperson à 20-60 % (poids/volume) |
| H 6 | Mélange de sel d'ammonium d'un copolymère de styrène et d'anhydride maléique (50:50) et d'un copolymère d'acrylonitrile et d'acide acrylique, en solution ou dispersion à 20-60% (poids/volume) |
| H 7 | Sels d'ammonium d'un copolymère de diisobutylène , d'anhydride maléique et d'acide maléique, en solution ou dispersion à 20-60% (poids/volume) |
| H 8 | Sels d'ammonium d'un copolymère de styrène, d'acide acrylique, et d'acide maléique, en solution ou dispersion à 20-60 % (poids/volume) |

Note : Les suspensions et dispersions sont ici des suspensions et dispersions aqueuses.

TABLEAU IX

LIANTS POUVANT ETRE UTILISES DANS LE TRAITEMENT DE
SURFACE (du stade 2)

| Références | Type de liant |
|---|---|
| L 1 à L13 | Liants préconisés dans le tableau III pour la masse |
| L14 | Alcool polyvinylique |
| L15 | Caséine |
| L16 | Carboxyméthylcellulose |
| L17 | Gélatine |
| L18 | Méthyléthylcellulose |
| L19 | Latex styrène butadiène carboxylé-dispersion aqueuse à 40-55 % |
| L20 | Alginate |
| L21 | Dextrines |
| L22 | Copolymère à base de chlorure de vinylidène dispersion aqueuse à 40 - 55 % |
| L23 | Copolymère éthylène - acétate de vinyle |
| L24 | Silicate de soude |
| L25 | mono aluminium phosphate |

TABLEAU X

EXEMPLES DE PRODUITS SPECIAUX POUVANT ETRE

UTILISES POUR LE TRAITEMENT DE SURFACE (au stade 2)

| Références | Types de produits spéciaux |
|---|---|
| S 1 | Phosphate d'ammonium bis (N-éthyl-2 perfluoroalkylsulfonamide) d'éthyle à 30-50 % |
| S 2 | Complexes de chrome trivalent d'acide stéarique à 5-30 % (poids/volume) en solution alcoolique |
| S 3 | Organopolysiloxannes, en émulsion à 30 - 50 % (poids/volume) |
| S 4 | Sulfamate - borate d'ammonium |
| S 5 | Catalyseur de polysiloxannes |
| S 6 | Catalyseurs de mélamine |
| S 7 | Sulfamate d'ammonium-phosphate d'ammonium-borate d'ammonium (1:1:1) en poids |

0031760

TABLEAU XI

PRODUITS AUXILIAIRES

| Références | Types de produits auxiliaires |
|---|---|
| A 1 | Polyphosphate de sodium |
| A 2 | Méthacrylate de sodium |
| A 3 | Mélamine-formaldéhyde |
| A 4 | Urée-formaldéhyde |
| A 5 | Glyoxal, en solution aqueuse à 30-70 % (poids/ volume) |
| A 6 | Colorants de nuançage pigmentaires basiques, acides directs, |
| A 7 | Azurant optique |
| A 8 | Stéarate de calcium, en solution aqueuse à 30 - 50 % (poids/volume) |
| A 9 | Stéarate d'ammonium, en solution aqueuse à 30 - 50 % (poids/volume) |
| A 10 | Antimousse |
| A 11 | Agent lubrifiant dérivé d'acide gras |

**0031760**

TABLEAU XII

EXEMPLE DE LIANTS HYDRAULIQUES POUVANT ETRE UTILISES

| Références | Caractéristiques |
|---|---|
| L H 1 | Chaux (62-67 %) - Silice (19-25 %) Alumine (2-9 %) + secondaires |
| L H 2 | Ciment Portland avec 5 % de Gypse |
| L H 3 | Ciment Portland avec 5-10 % de laitier chaux (40-50 %)- silice (26 à 32 %)- alumine (12 à 20 %) = CPAL 400 |
| L H 4 | Ciment Portland avec 10 à 20 % de laitier = CPAL 325 |
| L H 5 | Ciment Portland avec 5 à 10 % des cendres volantes-chaux (2 à 45 %)- silice (20 à 50 %) alumine (13 à 30 %) oxyde de fer (8 %)=CPAC400 |
| L H 6 | Ciment Portland avec 10 à 20 % de cendres volantes = CPAC 325 |
| L H 7 | Ciment Portland avec 5 à 10 % de Jouzzolanes (cendres d'origine volcanique animales ou végétales) = C P A Z 400 |
| L H 8 | Ciment Portland avec 10 à 20 % de Jouzzolanes= CPAZ 325 |
| L H 9 | Ciment Portland avec 5 à 10 % de laitier et de cendres volantes = C P A L C 400 |
| L H 10 | Ciment Portland avec 10 à 20 % de laitier et de cendres volantes = C P A L C 325 |

0031760

TABLEAU XII (suite)
EXEMPLE DE LIANTS HYDRAULIQUES POUVANT ETRE UTILISES

| Références | Caractéristiques |
|---|---|
| L H 11 | Ciment Portland avec 5 à 10% de laitier et de Jouzzolanes = C P A L Z 400 |
| L H 12 | Ciment Portland avec 10 à 20 % de laitier et de Jouzzolanes = C P A L Z 325 |
| L H 13 | Ciment Portland avec 25 à 35 % de laitier = C P F 250 ou 325 |
| L H 14 | Ciment Portland avec 45 à 55 % de laitier = C M M 250 ou 325 |
| L H 15 | Ciment Portland avec 65 à 75 % de laitier = C M F 250 ou 325 |
| L H 16 | Ciment Portland avec plus de 80 % de laitier = C L K 250 ou 325 · |
| L H 17 | Ciment de laitier à la chaux = CLX 100 -160 |
| L H 18 | Ciment à maçonner = C M 160 à 250 |
| L H 19 | Ciment naturel = C N 160 |
| L H 20 | Chaux hydraulique = X H ou X E H 60 et 100 |
| L H 21 | Ciment alumineux |
| L H 22 | Ciment prompt |
| L H 23 | Ciment réfractaire contient 60 à 80 % d'alumine |
| L H 24 | Mélanges de ciments |

0031760

## TABLEAU XIII

Exemples 4 à 7

### REVETEMENTS DE SOLS

| Numéros — Exemples | Témoin-Revêtement sol 4 | 5 | 6 | 7 |
|---|---|---|---|---|
| I-Fibres : parties en poids ............... | F1 = 16 | F1 = 16 | F1 = 16 | F1 = 16 |
| | F13= 10 | F13= 10 | F13= 5 | F13 = 0 |
| | F14= 2 | F14= 2 | F14= 2 | F14= 2 |
| Raffinage pâte épaisse °SR ................. | 20 - 30 | 20-30 | 20-30 | 20-30 |
| II-Charges minérales, parties en poids ........ | C1 =84 | 0 | 0 | 0 |
| III-Liant hydraulique, parties en poids ....... | 0 | LH2=84 | LH2=84 | LH2=84 |
| IV- Floculant avant liant-parties en poids en l'état ............... | P8 = 3 | P8 = 3 | P8 = 3 | P8 = 3 |
| V - Liant - parties en poids sec ............. | L12=10 | L12=10 | L12=10 | L12=10 |
| VI- Auxiliaires parties en poids en l'état ............... | A10=0,2 H1 =1,5 | A10=0,2 H1=1,5 | A10=0,2 H1 =1,5 | A10=0,2 H1=1,5 |
| VII-Floculant après liant... | P18=0,3 | P18=0,3 | P18=0,3 | P18=0,3 |
| parties en poids en l'état .............. | P1 =0,5 | P1 =0,5 | P1 =0,5 | P1 =0,5 |
| | P2=0,5 | P2=0,5 | P2=0,5 | P2=0,5 |
| VIII- Divers Antibiotiques-stade 1... | Oui | Oui | Oui | Oui |
| Stade 2 . Traitement de surface. | Non | Non | Non | Non |
| avec antibiotiques ... | Non | Non | Non | Non |

0031760

TABLEAU XIII (suite)

REVETEMENT DE SOLS

Exemples 8 à 13

| Numéros Exemples | 8 | 9 | 10 | 11 | 12 | 13 |
|---|---|---|---|---|---|---|
| I-Fibres: parties en poids... | | | | $Fl=16$ $Fl3=0$ $Fl4=2$ | $Fl=16$ $Fl3=3$ $Fl4=2$ | $F3=16$ $Fl3=0$ $Fl4=2$ |
| Raffinage pâte épaisse °SR ...... | stade 1 | stade 1 | stade 1 | 20-30 | 20-30 | 20-30 |
| II-Charges minérales parties en poids... | idem | idem | idem | 0 | $Cl=42$ | $Cl=42$ |
| III-Liant hydraulique, parties en poids | x.5 | ex.6 | ex.7 | $LH2=84$ | $LH2=42$ | $LHl6=42$ |
| IV-Floculant avant liant - parties en poids en l'état .......... | | | | $P8=3$ | $P7=3$ | $P7=3$ |
| V-Liant - parties en poids sec ..... | | | | $L9=10$ | $L9=10$ | $L9=10$ |
| VI-Auxiliaires - parties en poids en l'état .......... | | | | $A10=0,2$ $H1=1,5$ | $A10=0,2$ $H1=1,5$ | $A10=0,2$ $H1=1,5$ |
| VII-Floculant après liant ............ parties en poids en l'état............ | | | | $P18=0,3$ $P1=0,5$ $P2=0,5$ | $P18=0,3$ $P1=0,5$ $P2=0,5$ | $P18=0,3$ $P1=0,5$ $P2=0,5$ |
| VIII-Divers antibiotiques-stade 1 | non | non | non | non | non | non |
| Stade 2 Traitement de surface .......... | oui | oui | oui | oui | oui | oui |
| avec antibiotiques. | oui | oui | oui | oui | oui | oui |

TABLEAU XIII(suite)

REVETEMENT DE SOLS

Exemples 14 à 17

| Numéros Exemples | 14 | 15 | 16 | 17 |
|---|---|---|---|---|
| I-Fibres : | | | | |
| parties en poids...... | F3=16 | F3=16 | F3=16 | F3=16 |
| | F13=0 | F13=3 | F13=5 | F13=0 |
| | F14=2 | F16=4 | F14=2 | F14=2 |
| Raffinage pâte | | | | |
| épaisse °SR ......... | 20-30 | 20-30 | 20-30 | 20-30 |
| II-Charges minérales, | | | | |
| parties en poids...... | C1=42 | C1=42 | C1=32 | C1=42 |
| | | | C3=20 | |
| III-Liant hydraulique, | | | | |
| parties en poids ..... | LH20=42 | LH2=42 | LH2=32 | LH2=42 |
| IV-Floculant avant | | | | |
| liant - parties en | | | | |
| poids en l'état ...... | P7=3 | P7 =3 | P7 = 3 | P7=3 |
| V-Liant - parties en | | | | |
| poids sec .......... | L9=10 | L9=6 | L11=8 | L12=10 |
| | | L1 =3 | | |
| VI-Auxiliaires -parties | | | | |
| en poids en l'état .... | A10=0,2 | A10=0,2 | A10=0,2 | A10=0,2 |
| | H1 =1,5 | H1 =1,5 | H1 =1,5 | H1 =1,5 |
| VII- Floculant après | | | | |
| liant ............... | P18=0,3 | P18=0,3 | P18=0,3 | P18=0,3 |
| parties en poids en | | | | |
| l'état ............. | P1 =0,5 | P1=0,5 | P1=0,5 | P19=2 |
| | P2=0,5 | P2=0,5 | P2=0,5 | P2=0,5 |
| VIII-Divers | | | | |
| antibiotiques-stade 1 | non | non | non | non |
| stade 2 | | | | |
| Traitement de surface.. | oui | oui | oui | oui |
| avec antibiotiques..... | oui | oui | oui | oui |

TABLEAU XIV

CARACTERISTIQUES – REVETEMENTS DE SOLS

Exemples 4 à 6

| Caractéristiques mesurées après 3' d'étuvage à 180°C | 4 | 5 | 6 |
|---|---|---|---|
| Poids g/m2 ...................... | 480-500 | 480-500 | 480-500 |
| Densité ......................... | 0,80 0,85 | 0,80 0,85 | 0,80 0,85 |
| Charge de rupture-kg- | | | |
| sens marche ..................... | 6,2 | 9,9 | 8,7 |
| sens travers .................... | 5,4 | 8,5 | 7,3 |
| Allongement à la rupture en % | | | |
| sens marche ...... ............. | 2,7 | 3,8 | 3 |
| sens travers  ................... | 5 | 5,2 | 5,4 |
| Adhésion interne à l'état sec- Scott Bord (moyenne sens marche/ sens travers) ................... | 150 | 265 | 235 |
| C e n d r e s  en %  ........... | 67 % | 65,6% | 66 % |
| Stabilité dimensionnelle- sens travers - (après 24 h (trempage) dans l'eau).en % ............... | 0,3 % | 0,35 % | 0,32 % |
| Indice de déchirure (100) ....... | 45 | 48 | 47 |
| Souplesse (Θ inférieur témoin | | | |
| (ΘΘrettement inférieur au témoin | | ΘΘ | Θ |
| (0 égal au témoin | | | |
| (+ supérieur au témoin | | | |

TABLEAU XIV

CARACTERISTIQUES - REVETEMENTS DE SOLS

Exemples 7 à 11

| Caractéristiques mesurées après 3' d'étuvage à 180°C | 7 | 8  9  10 | 11 |
|---|---|---|---|
| Poids g/m2 ............... | 800-500 | Exemples 8-9-10 = exemples 5-6-7 | 480 500 |
| Densité ................ | 0,80 0,85 | avec traitements de surface | 0,80 0,85 |
| Charge de rupture-kg -- sens marche ............... | 9,1 | caractéristiques physiques | 8,8 |
| sens travers ............. | 8,4 | sensiblement équi- mais | 7,6 |
| Allongement à la rupture en % - sens marche ....... | 3,3 | meilleur uni de surface, moins | 3,9 |
| sens travers ............. | 5,1 | de peluchage, moins | 5,8 |
| Adhésion interne à l'état sec-Scott Bord-.......... | 200 | de moutonnement de l'enduction PVC (chez le | 202 |
| (moyenne sens marche/sens travers) ....... | 65,9% | transformateur) | 66% |
| Stabilité dimensionnelle- sens travers- (après 24h. (trempage) dans l'eau -en % | 0,31 | Stabilité dimension-nelle légèrement améliorée 0,2-0,28% | 0,33 |
| Indice de déchirure (100)... | 49 | | 42 |
| Souplesse(0 Inférieur témoin (00 nettement infé- rieur au témoin (0 égal au témoin (+ supérieur au témoin | 0 | | 0 à 0 |

0031760

TABLEAU XIV (suite)

CARACTERISTIQUES--REVETEMENTS DE SOLS

Exemples 12 à 14

| Caractéristiques mesurées après 3' d'étuvage à 180°C | 12 | 13 | 14 |
|---|---|---|---|
| Poids g/m2 ............... | 480-500 | 480-500 | 480-500 |
| Densité .................. | 0,80 0,85 | 0,80 0,85 | 0,80 0,85 |
| Charge de rupture-kg- | | | |
| sens marche ............... | 9,8 | 10,5 | 9,9 |
| sens travers ............. | 7,4 | 9,4 | 9,8 |
| Allongement à la rupture | | | |
| en % - sens marche ....... | 3,5 | 3,2 | 3 |
| sens travers ............. | 5,2 | 5,8 | 5 |
| Adhésion interne à l'état sec Scott Bond-(moyenne sens marche/sens travers....... | 215 . | 300 | 295 |
| Cendres en % ............. | 65,8 % | 66,1 % | 65,9 % |
| Stabilité dimensionnelle sens travers (après 24 h-trempage) dans l'eau) en % ...................... | 0,30 | 0,29 | 0,30 |
| Indice de déchirure (100). | 46 | 35 | 39 |
| Souplesse (0 Inférieur témoin (00 nettement inférieur ( au témoin (0 égal au témoin (+ supérieur au témoin . | 0 à 0 | 00 | 00 |

TABLEAU XIV (suite)

Exemples 15 à 17     CARACTERISTIQUES- REVETEMENTS DE SOLS

| Caractéristiques mesurées après 3' d'étuvage à 180°C | 15 | 16 | 17 |
|---|---|---|---|
| Poids g/m2 ............... | caractéristiques sensiblement équivalentes à celles des exemples 11 et 12 | | 480÷500 |
| | | | 0,70 |
| Densité .................. | | | 0,75 |
| Charge de rupture -kg- sens marche ............. | | | 8,7 |
| sens travers ............. | | | 5,2 |
| Adhésion interne à l'état sec -Scott Bord-(moyenne sens marche/sens travers......... | | | 200 |
| Cendres en % ............. | | | 65,6 % |
| Stabilité dimensionnelle- sens travers - (après 24 h. (trempage) dans l'eau) en% | | | 0,30 |
| Indice de déchirure (100) ... | | | 41 |
| Souplesse | | | |
| (⊖ Inférieur témoin | | | |
| (⊖⊖ nettement inférieur au témoin | | | 0 |
| (0 égal au témoin | | | |
| (+ supérieur au témoin | | | |

TABLEAU XV

AUTRES APPLICATIONS - (INCOMBUSTIBILITE)

Exemples 18 à 22

| N° exemples | 18 | 19 | 20 | 21 | 22 |
|---|---|---|---|---|---|
| I-Fibres |  |  |  |  |  |
| parties en poids ..... | F14=10 | F18=10 | F14=10 | F18=10 | F18=10 |
| II-Charges minérales | + | + | + | + | + |
| parties en poids...... | C1=30 | C9=30 | C1=30 | C1=30 | C1=30 |
| III- Liant hydraulique |  |  |  |  |  |
| parties en poids...... | LH16=60 | LH16=60 | LH16=60 | LH16=60 | LH16=60 |
| IV-Floculart avant |  |  |  |  |  |
| liant-parties en poids |  |  |  |  |  |
| en l'état .......... | P8=3 | P8=3 | P8=3 | PH=3 | P8=3 |
| V-Liant - parties en |  |  |  |  |  |
| poids .............. | L1=3 | L1=3 | L1=3 | L1=3 | L1=3 |
| VI-Auxiliaires-parties |  |  |  |  |  |
| en poids en l'état ... | A10=0,2 | A10=0,2 | A10=0,2 | A10=0,2 | A10=0,2 |
| VII-Floculant après |  |  |  |  |  |
| le liant - parties | P2=0,5 | P2=0,5 | P2=0,5 | P2=0,5 | P2=0,5 |
| en poids ............ | P19=5 | P19=5 | P19= 5 | P19 = 5 | P19=10 |
| VII- Divers ... |  |  |  |  |  |
| parties en poids ..... | - | - | - | - | - |
| Stade 2 |  |  |  |  |  |
| Traitement de surface. | ron | ron | oui | oui | oui |

TABLEAU XV (suite)

AUTRES APPLICATIONS -(INCOMBUSTIBLE·)

Exemples 23 à 27

| N° exemples | 23 | 24 | 25 | 26 | 27 |
|---|---|---|---|---|---|
| I - Fibres - parties en poids ........ | F18=10 | F18=10 | F18=3 F14=5 F17=15 | F16=10 | F18=3 F14=.5 F17=15 |
| | + | + | | + | |
| II-Charges minérales parties en poids... | C1=20 C2=20 | C1=30 | C1=30 | C1=40 | C1=20 C9=20 |
| III-Li art hydraulique parties en poids .. | LH21=50 | LH23=60 | LH16=60 | LH16=50 | LH16=60 |
| IV- Floculant avant liant- parties en poids en l'état... | P7=3 | P7=3 | P7=3 | P7=3 | P7=3 |
| V - Liant- parties en poids ........... | L1=3 | L1=3 | L1=3 | L1=5 | L1=3 |
| VI-Auxiliaires - parties en poids en l'état . | A10=0,2 | A10=0,2 | A10=0,2 | A10=0,2 | A10=0,2 |
| VII-Floculant après le liant -parties en poids ........... | P2=0,5 P19=5 | P2=0,5 P19=5 | P2=0,5 P19=5 | P2=0,5 P19=5 | P2=0,5 P19=5 |
| VII-Divers -parties en poids ......... | - | - | sulf. calcium pr satur/ 2 g/l | - | sulfate calcium pr satur/ 2 g/l |
| Stade 2 Traitement de surface. | oui | oui | oui | oui | oui |

# 0031760

TABLEAU XV (suite)

AUTRES APPLICATIONS -(INCOMBUSTIBLE)

EXEMPLES 28 et 29

| N° exemples | 28 | 29 |
|---|---|---|
| I-Fibres:parties en poids ..........., ...... | F18=3 F14=5 F17=15 | F18=3 F16=10 F17=10 |
| II-Charges minérales parties en poids .... | C1 =20 C9=20 | C1 =20 C9=20 |
| III-Liant hydraulique parties en poids .... | LH16=60 | LH16=60 |
| IV-Floculant avant liant parties en poids en l'état ............. | P7=3 | P7=3 |
| V-Liant- parties en poids ............... | L24=20 | L25 =20 |
| VI-Auxiliaires - parties en poids en l'état .............. | A10=0,2 | A10=0,2 |
| VII-Floculant après le liant - parties en poids ........... | P2=0,5 P19=5 | P2=0,5 P19=5 |
| VIII-Divers- parties en poids............ | sulfate de cal-cium pour saturation 2 g/l | sulfate de cal-cium pour satu-tion 2g/l |
| Stade 2 Traitement de surface.. | oui | oui |

TABLEAU XVI

AUTRES APPLICATIONS- RIGIDITE -

EXEMPLES 30 et 31

| N° exemples | 30 | 31 |
|---|---|---|
| I-Fibres:parties en poids ............. | F1 = 100 témoin | F1 = 100 |
| II-Charges minérales parties en poids .... | C1 = 30 / - | - / - |
| III-Liant hydraulique parties en poids .... | - | LH16 = 30 |
| IV-Floculant avant liant parties en poids en l'état ............. | - | P2=0,5 |
| V-Liant- parties en poids .............. | - | L1 = 2 |
| VI-Auxiliaires - parties en poids en l'état ............. | A10=0,2 | A10=0,2 |
| VII-Floculant après le liant - parties en poids .......... | P18=0,3 / P6 =0,4 | P18=0,3 / P2 =0,5 |
| VIII-Divers- parties en poids.......... | hydrofu-geant H1 =1,5 | hydro fugeant H1 =1,5 |
| Stade 2 Traitement de surface.. | oui | oui |

REVENDICATIONS

1. Nouveaux papiers contenant comme matériaux de base des fibres, au moins un liant, au moins un agent floculant et de préférence au moins une charge minérale, caractérisés en ce qu'ils comportent d'environ 10 % à environ 80 % en poids, par rapport au mélange constitué par les fibres, la charge minérale et le ciment , d'au moins un ciment.

2. Nouveaux papiers selon la revendication 1, caractérisés en ce que ledit ciment est présent à raison de 40 % à 70 % en poids, par rapport au mélange constitué par les fibres la charge minérale et ledit ciment.

3. Nouveaux papiers selon l'une des revendications 1 et 2, caractérisé en ce que lesdits papiers contiennent de 0,2 à 30 % en poids par rapport au mélange constitué par les fibres, la charge minérale et le ciment d'au moins un liant organique qui assure la liaison entre les divers ingrédients desdits papiers, lors de la floculation de ces ingrédients.

4. Produits selon l'une des revendications 1 à 3, caractérisés en ce que le ciment utilisé comporte au moins 50 % de particules inférieures à 80 microns.

5. Procédé pour la préparation d'un papier contenant du ciment caractérisé en ce que ledit ciment est introduit, au même stade que la charge, dans la suspension aqueuse de fibres et que le procédé est poursuivi selon les techniques connues de fabrication du papier.

6. Procédé selon la revendication 4 dans lequel l'adjonction du floculant est réalisé pour partie avant l'ajout du liant organique ou minéral et pour partie après l'ajout dudit liant.

7.    Applications des produits nouveaux définis
dans l'une des revendications 1 à 4, caractérisées
en ce qu'elles se situent dans les domaines de
l'impression-écriture, des revêtements, des matériaux incombustibles, des supports destinés à
l'emballage et des matériaux pour l'isolation
termique et phonique.

**RAPPORT DE RECHERCHE EUROPEENNE**

Numéro de la demande

0031760

EP 80 40 1814

Office européen
des brevets

| | **DOCUMENTS CONSIDERES COMME PERTINENTS** | | **CLASSEMENT DE LA DEMANDE (Int. Cl.³)** |
|---|---|---|---|
| Catégorie | Citation du document avec indication, en cas de besoin, des parties pertinentes | Revendica-tion concernée | |
| D/X | <u>FR - A - 2 377 883</u> (K. HOLBEK)<br><br>* revendications 1,13,16,21-23, 27-29,34; page 2; page 10, lignes 21-22; page 12, ligne 25 à page 13, dernière ligne; page 15, lignes 20-38; page 17, ligne 36 à page 18, ligne 37; page 41, lignes 15-25; page 43, exemples 50-54,61 * | 1-7 | D 21 H 3/78<br>C 04 B 31/32 |
| | <u>DE - C - 297 861</u> (HELLER)<br><br>* revendications 1 et 2 * | 1,3 | **DOMAINES TECHNIQUES RECHERCHES (Int. Cl.³)**<br><br>D 21 H 3/78<br>D 21 H 5/00<br>C 04 B 31/32 |
| | <u>CH - A - 283 344</u> (IFOVERKEN)<br><br>* page 1, ligne 60 à page 3, ligne 6 * | 1,5 | |
| | <u>US - A - 3 438 853</u> (C. HAINES, Jr. et al.)<br><br>* en entier * | 1,3,5 | |
| | <u>US - A - 2 514 021</u> (H. ABRAHAM)<br><br>* en entier * | 1-3, 5,7 | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention |
| P | <u>GB - A - 2 045 306</u> (CAPE BOARDS & PANELS)<br><br>* en entier * | 1,5,7 | E: demande faisant interférence<br>D: document cité dans la demande<br>L: document cité pour d'autres raisons |
| | | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 26-02-1981 | NESTBY |

**OEB Form 1503.1 06.78**